Europäisches Patentamt

European Patent Office

Office européen des brevets

(19)

(11) Veröffentlichungsnummer : **0 062 673**
**B1**

(12) **EUROPÄISCHE PATENTSCHRIFT**

(45) Veröffentlichungstag der Patentschrift :
**09.01.85**

(21) Anmeldenummer : **81902977.8**

(22) Anmeldetag : **24.10.81**

(86) Internationale Anmeldenummer :
**PCT/DE 81/00179**

(87) Internationale Veröffentlichungsnummer :
**WO/8201529 (13.05.82 Gazette 82/12)**

(51) Int. Cl.[4] : **B 64 D 17/32**

(54) **ZENTRALGURTSCHLOSS, INSBESONDERE FÜR FALLSCHIRMSPRINGER-KÖRPERGURTZEUGE.**

(30) Priorität : **24.10.80 DE 3040134**

(43) Veröffentlichungstag der Anmeldung :
**20.10.82 Patentblatt 82/42**

(45) Bekanntmachung des Hinweises auf die Patenterteilung : **09.01.85 Patentblatt 85/02**

(84) Benannte Vertragsstaaten :
**FR**

(56) Entgegenhaltungen :
CH-A- 513 607
CH-A- 523 817
DE-A- 1 431 203
DE-A- 1 456 117
DE-B- 1 070 034
GB-A- 361 859
GB-A- 389 437
GB-A- 591 641
US-A- 2 171 496
US-A- 2 557 084
US-A- 2 746 116

(73) Patentinhaber : **AUTOFLUG GMBH**
**Industriestrasse 10 Postfach 1180**
**D-2084 Rellingen (DE)**

(72) Erfinder : **HOENIGS, Michael**
**Anemonenweg 2**
**D-6074 Rödermark (DE)**
Erfinder : **REUSCHENBACH; Hermann**
**In der Au 23**
**D-5461 Rossbach (DE)**

(74) Vertreter : **Kühnemann, Klaus**
**Sonderburgstrasse 36**
**D-4000 Düsseldorf 11 (DE)**

**Beschreibung**

Technisches Gebiet

Die Erfindung betrifft ein Zentralgurtschloß, insbesondere für Fallschirmspringer-Körpergurtzeuge, mit einem Gehäuse und einem darin manuell drehbaren und axial beweglichen, längs durchbohrten und ein Bolzenglied darin aufnehmenden Hauptzapfen sowie einer mit mehreren Haltebolzen für die Gurtanschlußstücke zusammenwirkenden Ankerplatte, deren Verschiebung durch den axial beweglichen Hauptzapfen die Haltebolzen in die Gurtzeug-Freigabestellung verstellt. Derartige Zentralgurtschlösser dienen dazu, Fallschirmspringer nach der Landung schnell vom Fallschirm zu befreien, damit sie nicht über Land oder durch Wasser geschleppt werden, wenn der Wind den Fallschirm vor sich hertreibt.

Stand der Technik

Zentralgurtschlösser mit den angegebenen Merkmalen sind bereits bekannt, beispielsweise durch die DE-B-10 70 034. Hierbei muß der Fallschirmspringer in jedem Fall selbst das Gurtschloß betätigen, indem er den Hauptzapfen mittels eines vorzugsweise scheibenförmigen Handgriffes manuell verdreht und axial in die Freigabestellung drückt, wodurch die Haltebolzen aus den Ösen der Gurtanschlußstücke herausgezogen werden, so daß das Körpergurtzeug von der Person abfällt.

Es kann jedoch vorkommen, daß der Fallschirmspringer unter der Einwirkung von Schock, Kälte oder Verletzungen nicht in der Lage ist, sein Gurtschloß manuell zu betätigen, so daß er weitgehend hilflos im Gurtzeug verbleibt. Dies ist besonders gefährlich, wenn der Springer ins Meer gefallen ist, weil er dann im Schlepp des Fallschirmes ertrinkt, ehe Retter zur Stelle sind. Zur Abhilfe dieser Gefahr ist bereits vorgeschlagen worden, das Verbindungsglied zwischen den Fangleinen des Fallschirmes und den Schultergurten des Gurtzeuges unter Ausnutzung der höheren Leitfähigkeit von Meerwasser mittels elektrischer oder pyrotechnischer Einrichtungen selbsttätig zu trennen, wenn sie unter Wasser geraten. Hiermit ist der Nachteil verbunden, daß bauliche Veränderungen am Gurtzeug und an den Anschlußgestaltungen zu den Fangleinen des Fallschirmes vorgenommen werden müssen.

Darstellung der Erfindung

Ausgehend von dem beschriebenen Stand der Technik liegt der Erfindung die Aufgabe zugrunde, ein Zentralgurtschloß zu schaffen, welches in sich eine selbsttätige, durch Seewasser aktivierbare Auslösevorrichtung enthält. Dabei sollen die normale mechanische Funktion und manuelle Betätigungsmöglichkeit des Schlosses nicht eingeschränkt werden, und auch das Bauvolumen des Schlosses soll sich nicht wesentlich vergrößern. Eine weitere Aufgabe besteht darin, daß die üblicherweise vorhandene mechanische Sicherung in der gesicherten Schaltstellung des Schlosses von der selbsttätigen Auslösevorrichtung überbrückt werden kann, im übrigen aber wirksam bleibt.

Die erfindungsgemäße Lösung dieser Aufgabe ergibt sich aus dem kennzeichnenden Teil des Anspruchs 1. Vorteilhafte Ausgestaltungen und Weiterbildungen sind den übrigen Ansprüchen 2 bis 16 zu entnehmen.

Mit der Erfindung ist der Vorteil verbunden, daß die herkömmlichen Zentralgurtschlösser grundsätzlich weiterverwendet werden können und daß keinerlei Änderungen am Gurtzeug notwendig sind. Die bedeutet, daß sich die Fallschirmspringer auch nicht auf neue Handgriffe umzustellen brauchen, die von den gewohnten Handgriffen abweichen, was ebenfalls der Sicherheit bei der Lebensrettung dient. Eine Nachrüstung bereits im Einsatz befindlicher Schlösser ist aufgrund der Erfindung durchaus möglich. Die Herstellung neuer erfindungsgemäßer Schlösser erfordert nur einen vergleichsweise geringen Mehraufwand, weil die wesentlichen Bauteile unverändert bleiben.

Kurze Beschreibung der Zeichnungen

In der Zeichnung sind Ausführungsbeispiele der Erfindung wiedergegeben, welche nachstehend beschrieben werden. Es zeigen:

Figur 1 einen diametralen Querschnitt durch ein herkömmliches Zentralgurtschloß für Fallschirmspringer-Körpergurtzeuge,

Figur 2 einen Ausschnitt aus einem diametralen Querschnitt durch ein erfindungsgemäßes Zentralgurtschloß mit axial durchbohrtem Hauptzapfen und darin gelagertem Stößel,

Figur 3 den oberen Teil eines diametralen Querschnittes durch ein erfindungsgemäßes Schloß mit oberhalb des Gehäuses und Hauptzapfens angeordnetem Drehgriff, in dessen Innern die Bauteile zur seewasseraktivierten Auslösung des Schlosses untergebracht sind,

Figur 4 eine Darstellung ähnlich Fig. 3, wobei jedoch ein anderer Kraftspeicher zur Einwirkung auf den Stößel vorgesehen ist,

Figur 5 eine Ansicht von oben auf die Auslösevorrichtung gemäß Fig. 4.

Ausführung der Erfindung

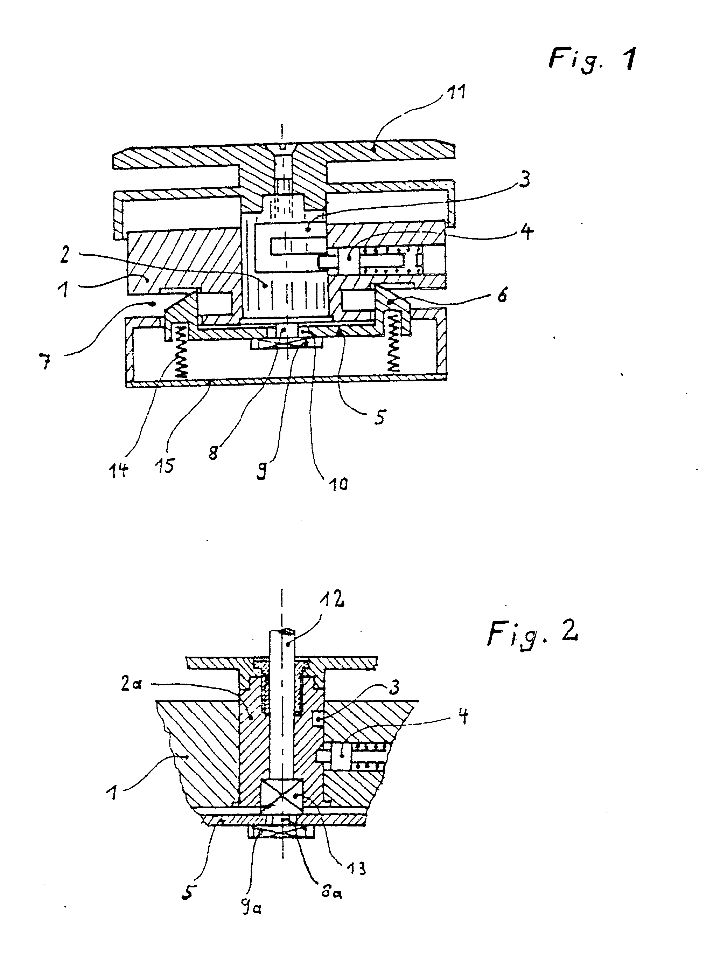

In Figur 1 ist der Aufbau eines herkömmlichen Zentralgurtschlosses dargestellt. In einem Gehäuse 1 ist drehbar und axial verschlieblich ein Hauptzapfen 2 gelagert. In einer tangential und axial verlaufenden Nut 3 am Umfang des Hauptzapfens 2 gleitet ein federbelasteter Sperrstift 4, der in Verbindung mit nicht dargestellten Sperrstufen in der Nut 3 sicherstellt, daß der Hauptzapfen 2 Dreh- und Längsbewegungen nur in bestimmten Richtungen ausführen kann und in verschiedenen Stellungen einrastet, die für die Funktionen « Anlegen », « Gesichert » und « Ablegen » vorgesehen sind.

Durch eine axiale Verschiebung des Hauptzapfens 2 in Richtung nach unten in der Stellung « Ablegen » drückt die untere Stirnfläche des Hauptzapfens 2 gegen eine Ankerplatte 5, an die mehrere Haltebolzen 6 angeformt sind, so daß diese über die Ankerplatte 5 miteinander in Verbindung stehen. Die Haltebolzen 6 ragen nach oben in Schlitze 7 des Gehäuses 1 hinein und können die in Figur 1 nicht dargestellten Ösen der Gurtanschlußstücke des Körpergurtzeuges aufnehmen und festhalten. Durch Verschiebung entgegen der Kraft von Druckfedern 14 geben die Haltebolzen 6 das Gurtzeug frei.

Mit dem Hauptzapfen 2 über eine Verjüngung 8 fest verbunden ist ein Riegel 9, der durch eine längliche Aussparung 10 der Ankerplatte 5 hindurchgeführt ist und eine unbeabsichtigte Verschiebung der Ankerplatte 5 verhindert. Nur in der Stellung « Anlegen » nimmt der Riegel 9 zur Aussparung 10 eine solche Lage ein, daß die Ankerplatte 5 und damit auch die Haltebolzen 6 beim Einführen der Ösen der Gurtanschlußstücke nach unten ausweichen können.

Die Bewegungen des Hauptzapfens 2 erfolgen mittels eines scheibenförmigen Drehgriffes 11 von Hand. Auf dem Drehgriff sind die erwähnten Funktionen des Schlosses eingraviert.

Aus Figur 2 ergibt sich entsprechend der Erfindung ein Hauptzapfen 2a und ein darin axial beweglich gelagerter Stößel 12, der durch eine Planfläche 13 in einer entsprechenden Aussparung des Hauptzapfens 2a gegen Verdrehung gesichert ist. Am unteren Ende des Stößels 12 sind eine Verjüngung 8a und ein Riegel 9a vorgesehen, deren Form ähnlich der Ausführung nach Figur 1 gestaltet ist, jedoch sind die Verjüngung und der Riegel mit dem Stößel 12, d. h. nicht mit dem Hauptzapfen 2a, fest verbunden. Dadurch bleibt der normale Funktionsablauf im Falle der manuellen Auslösung des Schlosses, wie zu Figur 1 beschrieben, unverändert erhalten. Unabhängig davon kann aber der Stößel 12 mittels geeigneter Vorrichtungen im Hauptzapfen 2a nach unten verschoben werden und damit die Haltebolzen 6 aus den Schlitzen 7 entfernen, ohne daß der Haupzapfen 2a in Dreh- oder Längsrichtung bewegt wird. Eine selbsttätige Trennung der Gurtanschlußstücke ist auf diese Weise möglich.

Das gesamte Unterteil eines herkömmlichen Zentralgurtschlosses gemäß Figur 1, nämlich Gehäuse 1, Ankerplatte 5 mit Haltebolzen 6, Druckfedern 14 und Deckel 15, kann für den Schloßaufbau gemäß Figur 2 übernommen werden. Auch der Hauptzapfen 2 ist bei entsprechender Nachbearbeitung wiederverwendbar.

Bei den Ausführungsbeispielen ist im Drehgriff 11 des Gurtschlosses ein Innenraum 16 vorgesehen, der von einem Griffgehäuse 11a und einem Griffdeckel 11b umschlossen wird. Die Grundplatte 17 des Drehgriffes 11 ist mit einer Hohlschraube 18 am Hauptzapfen 2a befestigt und durch eine ausgesparte Planfläche 19 formschlüssig verdrehgesichert. Im Innenraum 16 des Drehgriffes können geeignete Sensoren, der Kraftspeicher für die Betätigung des Stößels 12 und mechanische Übertragungsglieder vom Kraftspeicher auf den Stößel untergebracht werden.

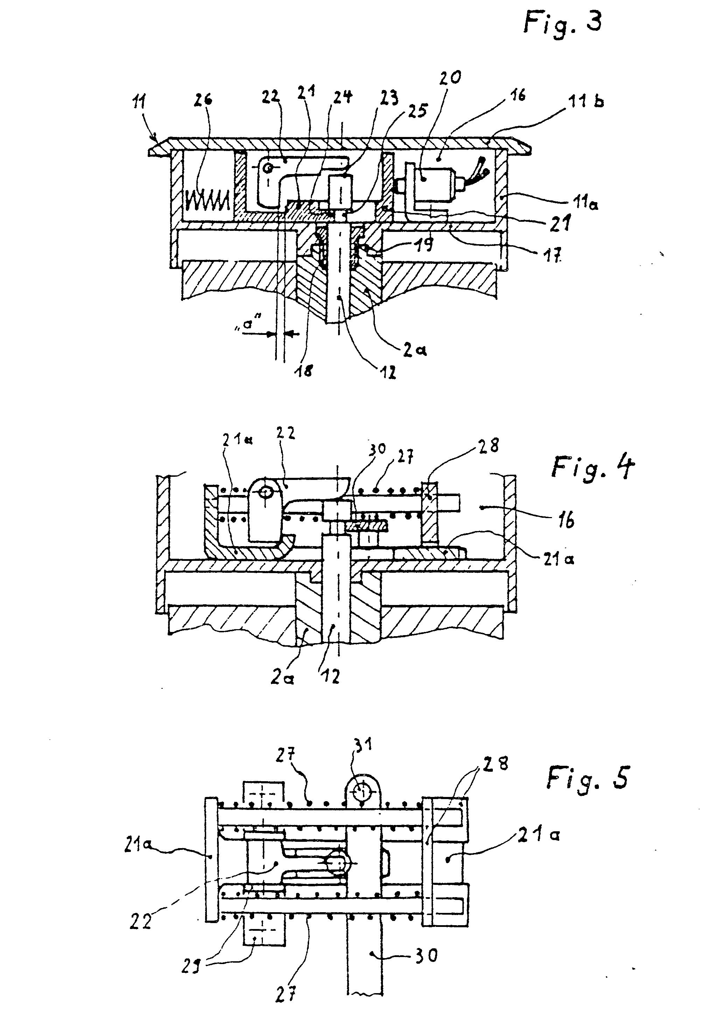

Als Kraftspeicher dient im Ausführungsbeispiel gemäß Figur 3 ein pyrotechnisches Element 20, welches über ein Gleitstück 21 und einen Winkelhebel 22 auf die Stirnfläche 23 des Stößels 12 wirkt. Bei Berührung mit Wasser wird das pyrotechnische Element 20 durch eine geeignete elektrische Schaltung gezündet, so daß seine Ausstoßkraft den Stößel 12 über Gleitstück 21 und Winkelhebel 22 nach unten verschiebt und auf diese Weise das Schloß öffnet und die Anschlußgurte des Körpergurtzeuges löst. Dies kann innerhalb des Bruchteils einer Sekunde geschehen.

Am Gleitstück 21 ist noch eine Nase 24 angebracht, die in eine Nut 25 des Stößels 12 eingreift und diesen gegen axiale Verschiebung sichert. Bei Zündung des pyrotechnischen Elements 20 muß das Gleitstück 21 zunächst eine Strecke « a » zurücklegen, bis der Stößel 12 freigegeben ist. Hierzu ist am Winkelhebel 22 ein entsprechendes Spiel vorgesehen. Durch eine Druckfeder 26 wird das Gleitstück 21 gegen ungewollte Verschiebung gesichert.

In den Figuren 4 und 5 ist ein weiteres Ausführungsbeispiel wiedergegeben, nämlich ein Zentralgurtschloß mit mechanischem Kraftspeicher, der aus zwei Schraubendruckfedern 27 besteht, die über ein Gleitstück 21a und den Winkelhebel 22 auf den Stößel 12 einwirken. Am anderen Ende stützen sich die Schraubenfedern 27 über ein Winkelstück 28 am Gehäuse 11a, 17 des Drehgriffes 11 ab. Der Winkelhebel 22 ist an einem Lagerbock 29 drehbar gelagert (Fig. 5). Ein Sperrhebel 30, welcher in eine entsprechende Aussparung des Stößels 12 eingreift, verriegelt den Stößel 12 im gespannten Zustand des Kraftspeichers in Gestalt der Schraubenfedern 27. Wird der Sperrhebel 30 um seinen Drehpunkt 31 geschwenkt, beispielsweise durch einen nicht dargestellten Elektromagneten, gibt er den Stößel 12 frei, so daß dieser von den Druckfedern 27 mittels des Winkelhebels 22 nach unten gedrückt wird.

Ein weiteres Ausführungsbeispiel, welches in der Zeichnung nicht dargestellt ist, sieht vor, daß als Kraftspeicher eine mit Druckgas gefüllte Kammer benutzt wird, wobei deren Druck über einen Kolben auf den Stößel 12 übertragen wird. Schließlich kann auch noch die Kraftwirkung eines beliebigen Kraftspeichers über einen Kolben auf eine Flüssigkeit übertragen und mittels eines weiteren Kolbens auf den Stößel 12 umgelenkt werden.

Gewerbliche Verwertbarkeit

Die gemäß der Erfindung ausgeführten Zentral-

gurtschlösser können wesentlich dazu beitragen, daß die damit ausgerüsteten Fallschirmspringer eine vergleichsweise viel größere Überlebenschance haben, wenn sie über See abspringen müssen. Etwas Derartiges spielt vor allem im militärischen Bereich und bei den Organisationen zur Rettung Schiffbrüchiger eine Rolle, weil die dabei geflogenen Einsätze häufig oder immer über See stattfinden. Dabei wird die vorgenannte vorteilhafte Wirkung der Erfindung mit vergleichsweise geringen baulichen Mitteln und entsprechend niedrigem Aufwand erzielt. Außerdem können bereits vorhandene Gurtschlösser herkömmlicher Ausführung umgerüstet werden.

**Ansprüche**

1. Zentralgurtschloß, insbesondere für Fallschirmspringer-Körpergurtzeuge, mit einem Gehäuse (1) und einem darin manuell drehbaren und axial beweglichen, längsdurchbohrten und ein Bolzenglied darin aufnehmenden Hauptzapfen (2a) sowie mit einer mit mehreren Haltebolzen (6) für die Gurtanschlußstücke zusammenwirkenden Ankerplatte (5), deren Verschiebung durch den axial beweglichen Hauptzapfen die Haltebolzen in die Gurtzeug-Freigabestellung verstellt, dadurch gekennzeichnet, daß in der Längsbohrung des Hauptzapfens (2a) ein Stößel (12) längsverschiebbar gelagert ist, dem ein Kraftspeicher (20, 27) zugeordnet ist, der bei Wasserberührung ausgelöst wird und den Stößel (12) und damit die Ankerplatte (5) mit den Haltebolzen (6) axial verschiebt.

2. Zentralgurtschloß nach Anspruch 1, dadurch gekennzeichnet, daß der Stößel (12) gegenüber dem Hauptzapfen (2a) verdrehgesichert ist und an seinem der Ankerplatte (5) zugewandten Ende eine Verjüngung (8a) und einen Riegel (9a) aufweist, die durch eine Aussparung (10) der Ankerplatte (5) hindurchgreifen.

3. Zentralgurtschloß nach Anspruch 1 oder 2, dadurch gekennzeichnet, daß der Stößel (12) mit einem Sperrglied (24, 30) zusammenwirkt, welches ihn gegen axiale Verschiebung sichert und bei Auslösung des Kraftspeichers (20, 27) freigibt.

4. Zentralgurtschloß nach Anspruch 1, dadurch gekennzeichnet, daß der Drehgriff (11a, 11b) des Gurtschlosses einen Innenraum (16) enthält, in dem der Kraftspeicher (20, 27) und Übertragungsglieder untergebracht sind.

5. Zentralgurtschloß nach Anspruch 1 oder 4, dadurch gekennzeichnet, daß der Kraftspeicher (20) mittels eines Winkelhebels (22) auf den Stößel (12) einwirkt.

6. Zentralgurtschloß nach Anspruch 1 oder 4, dadurch gekennzeichnet, daß der Kraftspeicher mittels eines Kolbens auf eine Flüssigkeit und mittels eines zweiten Kolbens auf den Stößel (12) einwirkt.

7. Zentralgurtschloß nach Anspruch 1 oder 4, dadurch gekennzeichnet, daß der Kraftspeicher aus einem pyrotechnischen Element (20) besteht.

8. Zentralgurtschloß nach Anspruch 1, 4 oder 5, dadurch gekennzeichnet, daß der Kraftspeicher aus wenigstens einer mechanischen Feder (27) besteht.

9. Zentralgurtschloß nach Anspruch 1 oder 4, dadurch gekennzeichnet, daß der Kraftspeicher aus einer mit Druckgas gefüllten Kammer und einem Kolben besteht.

10. Zentralgurtschloß nach Anspruch 6, 7 oder 9, dadurch gekennzeichnet, daß der Abtrieb des Kraftspeichers (20) auf ein Gleitstück (21) einwirkt, welches in Querrichtung zum Stößel (12) verschieblich angeordnet ist und mit einem Vorsprung oder Absatz an den Winkelhebel (22) stößt.

11. Zentralgurtschloß nach Anspruch 10, dadurch gekennzeichnet, daß das Gleitstück (21) eine Nase (24) hat, die in eine Nut (25) des Stößels (12) eingreift und diesen gegen axiale Verschiebung sichert.

12. Zentralgurtschloß nach Anspruch 8, dadurch gekennzeichnet, daß der Kraftspeicher aus zwei parallel nebeneinander angeordneten Schraubendruckfedern (27) besteht, die über ein Gleitstück (21a) auf den Winkelhebel (22) einwirken, welcher den Stößel (12) axial verschiebt.

13. Zentralgurtschloß nach Anspruch 12, dadurch gekennzeichnet, daß die Schraubendruckfedern (27) an einem Winkelstück (28) am Gehäuse (11b) des Drehgriffes (11) abgestützt sind.

14. Zentralgurtschloß nach Anspruch 12, dadurch gekennzeichnet, daß der Winkelhebel (22) an einem Lagerbock (29) schwenkbeweglich gelagert ist, wobei der Lagerbock (29) am Gehäuse (11a) des Drehgriffes (11) sitzt.

15. Zentralgurtschloß nach Anspruch 12, dadurch gekennzeichnet, daß seitlich des Stößels (12) ein schwenkbeweglicher Sperrhebel (30) angeordnet ist, der in der Sperrlage in eine Aussparung des Stößels (12) eingreift und diesen gegen Längsbewegungen sichert, wenn die Schraubendruckfedern (27) gespannt sind.

16. Zentralgurtschloß nach Anspruch 15, dadurch gekennzeichnet, daß zum Verschwenken des Sperrhebels (30) aus der Sperrstellung in die Freigabestellung ein Elektromagnet vorgesehen ist, welcher durch einen wasserempfindlichen Sensor ausgelöst wird.

**Claims**

1. Central belt lock, particularly for parachutists' body harnesses, having a housing (1) and a shaft (2a) manually rotatable and axially movable therein, the shaft (2a) having at least one longitudinal bore with a bolt mounted therein, and an anchor plate (5) interacting with a plurality of retaining bolts (6) for the belt attachment members, the displacement of said anchor plate (5) by the axially movable shaft (2a) bringing the retaining bolts (6) into the release position of the harness characterised in that in the longitudinal bore of the shaft (2a) a push rod (12) is mounted in longitudinally movable manner, having an associated actuator (20, 27) which is activated on contact with water and axially displaces the push rod (12) and hence the anchor plate (5) with the retaining bolts (6).

2. Central belt lock as claimed in claim 1, characterised in that the push rod (12) is secured against rotation relative to the shaft (2a) and at its end facing the anchor plate (5) it has a tapered portion (8a) and a bar (9a), which pass through an opening (10) in the anchor plate (5).

3. Central belt lock as claimed in claims 1 or 2, characterised in that the push rod (12) cooperates with a locking member (24, 30) which secures it against axial displacement and releases it when the actuator (20, 27) is actuated.

4. Central belt lock as claimed in claim 1, characterised in that the rotary handle (11a, 11b), of the belt lock contains an inner space (16) in which the actuator (20, 27) and transmission means are accomodated.

5. Central belt lock as claimed in claims 1 or 4, characterised in that the actuator (20) acts on the push rod (12) by means of a bell crank lever (22).

6. Central belt lock as claimed in claims 1 or 4, characterised in that the actuator acts on a liquid *via* a piston and on the push rod (12) *via* a second piston.

7. Central belt lock as claimed in claims 1 or 4, characterised in that the actuator consists of a pyrotechnic element (20).

8. Central belt lock as claimed in claims 1, 4 or 5, characterised in that the actuator consists of at least one mechanical spring (27).

9. Central belt lock as claimed in claims 1 or 4, characterised in that the actuator consists of a chamber filled with pressurised gas and a piston.

10. Central belt lock as claimed in claims 6, 7 or 9, characterised in that the power take-off of the actuator (20) acts on a sliding contact (21) which is movably mounted at right-angles to the push rod (12) and pushes against the bell crank lever (22) by means of a projection or step.

11. Central belt lock as claimed in claim 10, characterised in that the sliding contact (21) has a lug (24) which engages in a groove (25) in the push rod (12) and prevents the latter from moving axially.

12. Central belt lock as claimed in claim 8, characterised in that the actuator consists of two helical compression springs (27) mounted parallel side by side, which act *via* a sliding contact (21a) on the bell crank lever (22) which axially displaces the push rod (12).

13. Central belt lock as claimed in claim 12, characterised in that the helical compression springs (27) rest on an angle portion (28) on the housing (11b) of the rotary handle (11).

14. Central belt lock as claimed in claim 12, characterised in that the bell crank lever (22) is pivotally mounted on a bearing block (29) which rests on the housing (11a) of the rotary handle (11).

15. Central belt lock as claimed in claim 12, characterised in that, laterally of the push rod (12), there is mounted a pivotable locking lever (30) which engages in a recess in the push rod (12) in the locking position and prevents the push rod from moving longitudinally when the helical compression springs (27) are clamped in place.

16. Central belt lock as claimed in claim 15, characterised in that, for pivoting the locking lever (30) out of the locking position and into the release position, an electromagnet is provided which is actuated by a water-sensitive sensor.

**Revendications**

1. Fermeture de sangle centrale, en particulier pour harnais de parachutistes, comprenant un boîtier (1) et un tourillon principal (2a) pouvant être tourné manuellement à l'intérieur et mobile en direction axiale, muni d'un alésage traversant longitudinal et y recevant un organe en forme de tige, ainsi qu'une plaque d'ancrage (5) coopérant avec plusieurs tenons de retenue (6) destinés aux éléments de raccordement de la sangle, dont le déplacement provoque celui des tenons de retenue en position déverrouillée de la sangle par l'intermédiaire du tourillon principal mobile en direction axiale, caractérisée en ce qu'un poussoir (12) est monté de façon à pouvoir se déplacer longitudinalement dans l'alésage longitudinal du tourillon principal (2a) auquel est associé un accumulateur d'énergie (20, 27) qui se déclenche au contact de l'eau et déplace axialement le poussoir (12) et de ce fait la plaque d'ancrage (5) avec les tenons de retenue (6).

2. Fermeture de sangle centrale selon la revendication 1, caractérisée en ce que le poussoir (12) est monté de manière à ne pas pouvoir tourner par rapport au tourillon principal (2a) et comprend à son extrémité qui est tournée vers la plaque d'ancrage (5) une partie de diamètre réduit (8a) et un verrou (9a) qui traversent la plaque d'ancrage (5) par un évidement (10).

3. Fermeture de sangle centrale selon la revendication 1 ou 2, caractérisée en ce que le poussoir (12) coopère avec un organe d'arrêt (24, 30) qui l'empêche de se déplacer en direction axiale et le libère quand il y a déclenchement de l'accumulateur d'énergie (20, 27).

4. Fermeture de sangle centrale selon la revendication 1, caractérisée en ce que la poignée tournante (11a, 11b) de la fermeture de la sangle comprend une cavité (16) dans laquelle sont montés l'accumulateur d'énergie (20, 27) et des organes de transmission.

5. Fermeture de sangle centrale selon la revendication 1 ou 4, caractérisée en ce que l'accumulateur d'énergie (20) agit sur le poussoir (12) par l'intermédiaire d'un levier coudé (22).

6. Fermeture de sangle centrale selon la revendication 1 ou 4, caractérisée en ce que l'accumulateur d'énergie agit sur un fluide par l'intermédiaire d'un piston et sur le poussoir (12) par l'intermédiaire d'un second piston.

7. Fermeture de sangle centrale selon la revendication 1 ou 4, caractérisée en ce que l'accumulateur d'énergie est constitué par un élément pyrotechnique (20).

8. Fermeture de sangle centrale selon l'une des revendications 1, 4 ou 5, caractérisée en ce que l'accumulateur d'énergie est constitué par au moins un ressort mécanique (27).

9. Fermeture de sangle centrale selon la revendication 1 ou 4, caractérisée en ce que l'accumulateur d'énergie est constitué par une chambre remplie d'un gaz sous pression et par un piston.

10. Fermeture de sangle centrale selon la revendication 6, 7 ou 9, caractérisée en ce que la sortie de l'accumulateur d'énergie (20) agit sur une pièce coulissante (21) qui est disposée mobile en direction transversale par rapport au poussoir (12) et exerce une poussée sur le levier coudé (22) au moyen d'une saillie ou d'un gradin.

11. Fermeture de sangle centrale selon la revendication 10, caractérisée en ce que la pièce coulissante (21) comprend un nez (24) qui pénètre dans une gorge (25) du poussoir (12) et retient ce dernier en l'empêchant d'effectuer un mouvement axial.

12. Fermeture de sangle centrale selon la revendication 8, caractérisée en ce que l'accumulateur d'énergie est constitué par deux ressorts de compression hélicoïdaux disposés parallèlement l'un à l'autre et agissant par l'intermédiaire d'une pièce coulissante (21a) sur le levier coudé (22) qui déplace axialement le poussoir (12).

13. Fermeture de sangle centrale selon la revendication 12, caractérisée en ce que les ressorts de compression hélicoïdaux (27) s'appuient sur une pièce coudée (28) dans le boîtier (11b) de la poignée tournante (11).

14. Fermeture de sangle centrale selon la revendication 12, caractérisée en ce que le levier coudé (22) est monté de façon oscillante dans un palier (29), ce palier (29) étant disposé dans le boîtier (11a) de la poignée tournante (11).

15. Fermeture de sangle centrale selon la revendication 12, caractérisée en ce que sur le côté du poussoir (12) est monté un levier d'arrêt (30) qui, pouvant osciller, pénètre en position d'arrêt dans un évidement du poussoir (12) et empêche ce dernier d'effectuer des mouvements longitudinaux quand les ressorts de compression hélicoïdaux (27) sont sous tension.

16. Fermeture de sangle centrale selon la revendication 15, caractérisée en ce que pour faire osciller le levier d'arrêt (30) de sa position d'arrêt et l'amener en position déverrouillée est prévu un électro-aimant qui est excité par un détecteur sensible à l'eau

Fig. 1

Fig. 2

*Fig. 3*

*Fig. 4*

*Fig. 5*